# EUROPEAN PATENT SPECIFICATION

(11) **EP 4 337 481 B1**
(45) Date of publication and mention of the grant of the patent: **09.07.2025**
(21) Application number: 22728841.2
(22) Date of filing: 11.05.2022
(51) Int. Cl.: B60H 1/00, B60H 1/32

(54) **HVAC UNIT WITH AN EVAPORATOR UNIT**
HLK-EINHEIT MIT EINER VERDAMPFEREINHEIT
UNITÉ DE CVC AVEC UNE UNITÉ D'ÉVAPORATION

(30) Priority: 12.05.2021 DE 102021112524
(43) Date of publication of application: 20.03.2024
(73) Proprietor: Valeo Klimasysteme GmbH, 96476 Bad Rodach (DE)
(72) Inventor: BELLUR, Raghu Tejaswi, 96476 Bad Rodach (DE); SOTO, Christian Jonhatan, 96476 Bad Rodach (DE); LISKA, Jan, 10800 Prague (CZ); LEPOT, Juraj, 10800 Prague (CZ)
(74) Representative: Valeo Systèmes Thermiques
(86) International application number: PCT/EP2022/062859
(87) International publication number: WO 2022/238517

(56) References cited:
- EP-A1- 3 025 883
- JP-A- 2000 002 495
- JP-A- 2013 086 753

## Description

The invention relates to a heating, ventilation and/or air conditioning unit with an evaporator unit.

Heating, ventilation and/or air conditioning units are designed to generate one or more temperature-controlled air streams. In motor vehicles, units of this type are used for the aeration and air conditioning of a vehicle interior.

To this end, firstly an air stream is drawn in via a fresh air inlet by means of a fan, and then the air stream flows through and is cooled by an evaporator.

When the fresh air is being drawn in, it is possible for not only air but also water to be drawn in, for example when it is raining or if water runs into the fresh air inlet during a washing operation.

JP2000002495 A discloses a containing structure for a heat exchanger. An evaporator is disposed while locating the tank part on the underside, the inlet and outlet passages are covered with a damping material from the vicinity of the inlet and outlet to the lower part of the evaporator and a heat insulating material is fixed to the outside of the damping material.

Each of EP3025883 A1 and JP2013086753 A discloses a heating, ventilation and/or air conditioning unit comprising an evaporator and an elastic damping material which is fastened on an outer side of the evaporator.

Consequently, there is the risk of water entering the fan or a filter arranged upstream of the evaporator, thereby possibly adversely affecting the function of the heating, ventilation and/or air conditioning unit.

It is therefore an object of the present invention to provide a heating, ventilation and/or air conditioning unit with an evaporator unit that allows penetrated water to be discharged quickly from the heating, ventilation and/or air conditioning unit.

This object is achieved according to the invention claimed in independent claim 1. Preferred embodiments of the invention are laid down in the appended dependent claims.

The designations "top" and "bottom" refer to an alignment in which the evaporator unit is mounted in a vehicle or in another unit.

The channel formed by the sealing strips serves to guide drawn-in water along the evaporator in a controlled manner towards the bottom, where the water can flow into a base trough and can be discharged from the heating, ventilation and/or air conditioning unit through a condensed water outlet. The channel therefore prevents penetrated water from dispersing in an uncontrolled manner.

Furthermore, the elastic damping material serves to damp vibrations and to seal the evaporator with respect to the housing.

According to the invention, the elastic damping material is utilized in order to form a channel for the removal of water. In this way, the evaporator unit is particularly compact and cost-effective.

Within the meaning of the invention, a side face or an end face is to be understood to mean not necessarily merely a continuous, planar face, but rather a face of a sheath of the evaporator, since the evaporator has a multiplicity of fins and therefore a ribbed structure.

In addition, the top and the bottom edge and the side edges do not imperatively run along a sharp rim, since the transition from the end faces to the side faces can also be rounded.

Preferably, one of the two separate sealing strips continues on the side face assigned to the bottom edge and the other of the two separate sealing strips ends on the side face assigned to the side edge. As a result, less elastic damping material is used.

The other sealing strip ends in particular on the side face at a distance from the side face assigned to the bottom edge. In this way, an outlet opening of the channel on the side face is directed both downwards and to the side. Therefore, water guided in the channel can flow away not only downwards, but also to the side. This is advantageous to the effect that, in an installed state of the evaporator unit in a heating, ventilation and/or air conditioning unit, the water can be conducted away from a filter arranged upstream of the evaporator.

The greater the distance of the sealing strip from the side face assigned to the bottom side edge, the larger the lateral opening. However, the distance should not be too large, since the length of the channel shortens as the distance increases, and controlled guidance of the water on the side face is adversely affected by too short a channel.

According to one preferred embodiment, a further sealing strip that likewise continues on the side face assigned to the bottom edge is arranged on the opposite side face, wherein the sealing strips end at a distance from one another on the side face assigned to the bottom edge. This forms an interruption in the elastic damping material on the side face assigned to the bottom edge, as a result of which water which condenses on the evaporator can better drain off downwards. In particular, a situation in which water is on the elastic damping material for a long period of time is avoided.

The two separate sealing strips are joined to one another for example at a junction point, wherein the junction point is arranged on the side face in a region adjoining the top edge. The application of the sealing strips to the side face is simplified by the sealing strips being joined to one another at a junction point. More specifically, the sealing strips are aligned at a defined distance from one another owing to the junction point.

The elastic damping material may be in the form of a unipartite seal element, for example in the form of a stamped part or a shaped part. As a result, the production of the elastic damping material is particularly easy and cost-effective.

According to one preferred embodiment, the elastic damping material only partially covers the side faces in the width direction. This means that the side faces are wider than the elastic damping material. This likewise contributes to a low use of elastic damping material.

For example, the elastic damping material is adhesively bonded to the evaporator. This allows the elastic damping material to be applied to the evaporator particularly easily.

The elastic damping material may be a foamed material. With foamed materials, it is usually possible to achieve good damping and sealing.

The object is achieved according to the invention in claim 1. The bypass duct is therefore formed automatically in a particularly easy way when the heating, ventilation and/or air conditioning unit is being assembled or when the evaporator unit is being inserted into the housing.

In the bypass duct, penetrated water can be conducted particularly quickly and reliably to a condensed water outlet without the water dispersing in the heating, ventilation and/or air conditioning unit in an uncontrolled manner.

The elastic damping material is compressed to some extent when the evaporator unit is being inserted into the housing, with the result that the bypass duct is automatically sealed.

The housing may have a bulge running along the channel in such a way that the bulge together with the channel forms the bypass duct with respect to the evaporator. Such a bulge makes it possible to enlarge a cross section of the bypass duct, with the result that even relatively large quantities of water can be removed quickly and reliably.

Further advantages of the invention will emerge from the following description and from the drawings, to which reference is made. In the drawings:
- Figure 1 shows a heating, ventilation and/or air conditioning unit according to the invention,
- Figure 2 shows an evaporator unit of a heating, ventilation and/or air conditioning unit according to the invention in a perspective view,
- Figure 3 shows the evaporator unit from Figure 2 in a further view, and
- Figure 4 shows a cross section through the heating, ventilation and/or air conditioning unit from Figure 1.

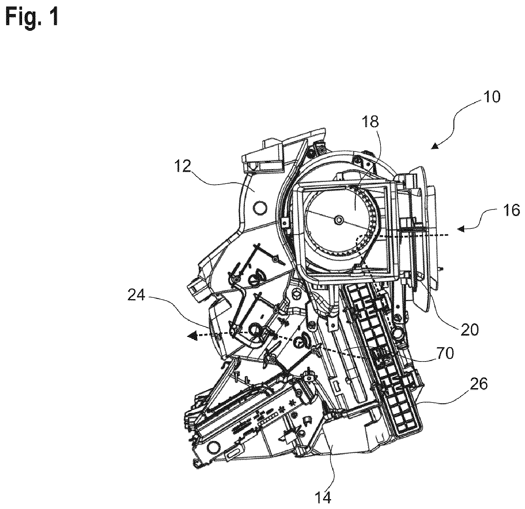

Figure 1 shows a heating, ventilation and/or air conditioning unit 10.

Heating, ventilation and/or air conditioning units 10 of this type are commonly used in motor vehicles to aerate and air condition a vehicle interior.

The heating, ventilation and/or air conditioning unit 10 comprises a housing 12, which usually has two housing shells which are fastened to one another and only one of which can be seen in Figure 1, and also a base trough 14, which is joined in a fluid-tight manner to the two housing shells and forms a base of the housing 12.

The heating, ventilation and/or air conditioning unit 10 has a fresh air inlet 16 through which fresh air is drawn in, in particular by means of a fan 18 which is accommodated in the housing 12.

The fresh air inlet 16 is formed in an inlet connector 20, which likewise forms a part of the housing 12.

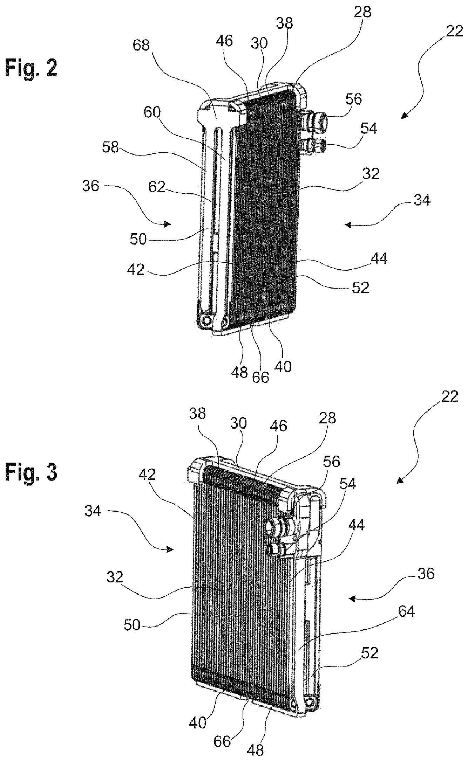

An evaporator unit 22 is accommodated in the housing 12. This evaporator unit is illustrated in two different perspective views in Figures 2 and 3.

An air guide for air drawn in through the fresh air inlet 16 extends from the fresh air inlet 16 through the housing 12 to the evaporator unit 22 and from the evaporator unit 22 to an air outlet 24.

A filter 26, through which the drawn-in air likewise flows, is arranged upstream of the evaporator unit 22.

The housing 12 is in particular a fan housing, in which fan flaps are accommodated in addition to the evaporator unit 22. For the sake of simplicity, the fan flaps are not illustrated in the figures.

In Figure 1, a path of an air guide is schematically illustrated by way of example using a dashed line, it being possible for the exact path to vary depending on the position of the fan flaps.

The housing 12 usually has multiple air outlets 24, an air stream being conducted to specific air outlets 24 depending on the position of the fan flaps.

For the air conditioning of a vehicle interior, fresh air is drawn in and glides through the evaporator unit 22, with the fresh air being cooled.

In addition to an evaporator 28, the evaporator unit 22 comprises an elastic damping material 30, which is fastened on the outer side of the evaporator 28. For example, the elastic damping material 30 is adhesively bonded to the evaporator 28.

The evaporator 28 has two oppositely directed end faces 32, which form an inlet side 34 and an outlet side 36 for the air stream.

The evaporator 28 has a top edge 38 and a bottom edge 40 and also two side edges 42, 44, each of which joins the top edge 38 to the bottom edge 40.

The top edge 38, the bottom edge 40 and the side edges 42, 44 together surround the two end faces 32 in the manner of a frame in a side view.

A side face 46, 48, 50, 52 is assigned to each edge 38, 40, 42, 44. The side faces 46, 48 assigned to the top edge 38 and the bottom edge 40 form in particular a top side and a bottom side, respectively, of the evaporator 28.

The side faces 46, 48 are curved in the exemplary embodiment, since the edges of the evaporator 28 are rounded at the top and bottom.

In addition, the evaporator 28 has a coolant inlet 54 and a coolant outlet 56.

As can be seen in Figures 2 and 3, the elastic damping material 30 on the end faces 32 is arranged over a height between the coolant inlet 54 or the coolant outlet 56 and the side face 46 of the top edge 38.

As an alternative, the elastic damping material 30 on the end faces can also extend as far as the height of the coolant inlet 54 or the coolant outlet 56.

Along the bottom edge 40, the elastic damping material 30 is arranged merely on the assigned side face 48 and the end faces 32 are free of elastic damping material 30 in the region of the bottom edge 40.

Elastic damping material 30 is likewise arranged on the side faces 50, 52 assigned to the side edges 42, 44.

As can be seen in Figure 2, on the side face 50 assigned to the side edge 42, the elastic damping material 30 is arranged at least in certain portions in the form of two separate sealing strips 58, 60.

A channel 62 is formed between the sealing strips 58, 60.

Water can be guided along the evaporator 28 through the channel 62 towards the bottom, where the water can run into the base trough 14.

A condensed water outlet, through which the water can ultimately drain out of the heating, ventilation and/or air conditioning unit 10, is present in the base trough 14.

In particular, the sealing strips 58, 60 are arranged on the side face 50, which is arranged opposite to the side face 52 on which the coolant inlet 54 and the coolant outlet 56 are present. As a result, the draining-off of water is not adversely affected by the connection pieces of the coolant inlet 54 or the coolant outlet 56.

The sealing strips 58, 60 run parallel to one another.

However, one of the two sealing strips 58 is shorter than the other sealing strip 60. The shorter sealing strip 58 ends on the side face 50 assigned to the side edge 42.

More specifically, the sealing strip 58 ends on the side face 50 at a distance from the side face 48 assigned to the bottom edge 40.

The other sealing strip 60 continues on the side face 48 assigned to the bottom edge 40.

The shortened sealing strip 58 makes it possible not only for water to flow downwards out of the channel 62, but for the water to also flow to some extent to the side, as can be seen in Figure 2.

In particular, the sealing strip 58 which has a shortened form is that which, in the installed state of the evaporator unit 22, is spaced apart further from a filter 26 in the flow direction than is the other sealing strip 60. As a result, the water at the bottom end of the channel 62 is conducted away from the filter 26 to some extent, which avoids the penetration of water into the filter 26.

The other, longer sealing strip 60 ends on the side face 48 assigned to the bottom edge 40.

In addition, a further sealing strip 64 that likewise continues on the side face 48 assigned to the bottom edge 40 is arranged on the opposite side face 52.

The sealing strips 60, 64 end at a distance from one another on the side face 48 assigned to the bottom edge 40. This forms an interruption 66, through which water can flow away.

The elastic damping material 30 preferably extends over the entire length of the side faces 50, 52, as is illustrated in Figures 2 and 3.

Viewed overall, the elastic damping material 30 extends in strip form and around the periphery over the side faces 46, 48, 50, 52.

As can be seen in Figure 2, the two sealing strips 58, 60 between which the channel 62 is formed are joined to one another at a junction point 68. The sealing strips 58, 60 are thus aligned at a defined distance in relation to one another by way of the junction point 68 at least at one end. This simplifies the application of the sealing strips 58, 60 to the side face 50.

The junction point 68 is arranged on the side face 50 in a region adjoining the top edge 38. Because the junction point 68 is arranged at a relatively high level on the side face 50, it is also possible for the channel 62 to start at a relatively high level on the side face 50, this being advantageous in terms of a quick and reliable removal of water.

The elastic damping material 30 extends in the region of the junction point 68 both from the side face 46 assigned to the top edge 38 and from the junction point 68 to the end faces 32 of the evaporator 28, the elastic damping material 30 running continuously from the junction point 68 across the end faces 32 to the side face 46 assigned to the top edge 38. What is meant by this is that the elastic damping material 30 is not subdivided on the end faces 32. In this way, a pocket which receives a corner of the evaporator 28 is formed in the elastic damping material 30. The pocket makes it possible to align the elastic damping material 30 on the evaporator 28, with the result that positioning the elastic damping material 30 is simplified.

The elastic damping material 30 is a foamed material, for example.

In particular, the elastic damping material 30 is a unipartite seal element.

To reduce the water uptake, a closed-pore foam can be used.

When the evaporator unit 22 is received in the housing 12, the elastic damping material 30 is clamped between the housing 12 and the evaporator 28 and seals an intermediate space between the housing 12 and the evaporator 28.

In particular, the elastic damping material 30 on the side faces 50, 52 assigned to the side edges 42, 44 ensures that no air can flow past the evaporator 28.

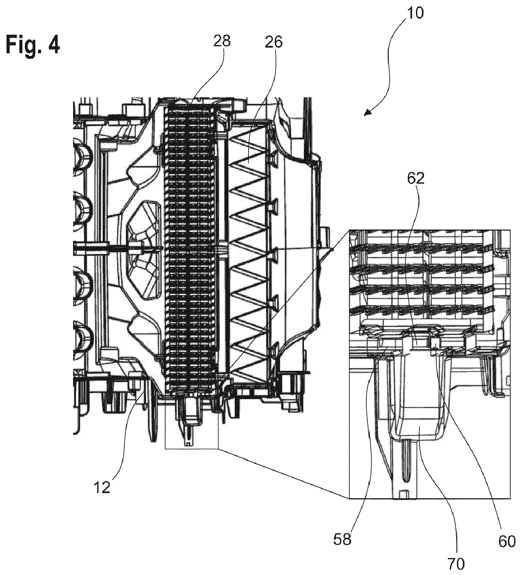

When the evaporator unit 22 is received in the housing 12, the housing 12 covers the channel 62 formed between the sealing strips 58, 60 in such a way that the channel 62 forms a bypass duct with respect to the evaporator 28. This can be seen in the sectional illustration shown in Figure 4.

Water drawn in via the air inlet 16 of the heating, ventilation and/or air conditioning unit 10 can be removed through the bypass duct.

As is shown in Figure 1 and in Figure 4, the housing 12 has a bulge 70, which runs along the channel 62 in such a way that the bulge 70 together with the channel 62 forms the bypass duct with respect to the evaporator 28.

## Claims

1. Heating, ventilation and/or air conditioning unit (10) with an evaporator unit (22) and with a housing (12) in which the evaporator unit (22) is received, the evaporator unit (22) comprising an evaporator (28) having two oppositely directed end faces (32), which form an inlet and an outlet side (34, 36) for the air stream, having a top and a bottom edge (38, 40) and having two side edges (42, 44) joining the top and the bottom edge (38, 40), which together surround the two end faces (32), wherein the top and the bottom edge (38, 40) and the side edges (42, 44) each have an assigned side face (46, 48, 50, 52), and comprising an elastic damping material (30) which is fastened on the outer side of the evaporator (28),
**characterized in that**,
on one of the side faces (50, 52) assigned to the side edges (42, 44), the elastic damping material (30) is arranged at least in certain portions in the form of two separate sealing strips (58, 60), in such a way that a channel (62) is formed between the sealing strips (58, 60), wherein the elastic damping material (30) is clamped between the housing (12) and the evaporator (28), and wherein the housing (12) covers the channel (62) formed between the sealing strips (58, 60), in such a way that the channel (62) forms a bypass duct with respect to the evaporator (28).

2. Heating, ventilation and/or air conditioning unit (10) according to Claim 1, **characterized in that** one of the two separate sealing strips (58, 60) continues on the side face (48) assigned to the bottom edge (40) and the other of the two separate sealing strips (58, 60) ends on said one side face (50) assigned to the side edge (42).

3. Heating, ventilation and/or air conditioning unit (10) according to Claim 2, **characterized in that** the other sealing strip (58) ends on said one side face (50) at a distance from the side face (48) assigned to the bottom edge (40).

4. Heating, ventilation and/or air conditioning unit (10) according to either of Claims 1 and 2, **characterized in that** a further sealing strip (64) that likewise continues on the side face (48) assigned to the bottom edge (40) is arranged on the opposite side face (52) assigned to the opposite side edge (44), wherein the sealing strips (60, 64) end at a distance from one another on the side face (48) assigned to the bottom edge (40).

5. Heating, ventilation and/or air conditioning unit (10) according to one of the preceding claims, **characterized in that** the two separate sealing strips (58, 60) are joined to one another at a junction point (68), wherein the junction point (68) is arranged on said one side face (50) assigned to the side edge (42), in a region adjoining the top edge (38).

6. Heating, ventilation and/or air conditioning unit (10) according to one of the preceding claims, **characterized in that** the elastic damping material (30) is in the form of a unipartite seal element.

7. Heating, ventilation and/or air conditioning unit (10) according to one of the preceding claims, **characterized in that** the elastic damping material (30) is adhesively bonded to the evaporator (28).

8. Heating, ventilation and/or air conditioning unit (10) according to one of the preceding claims, **characterized in that** the elastic damping material (30) is a foamed material.

9. Heating, ventilation and/or air conditioning unit (10) according to one of the preceding claims, **characterized in that** the housing (12) has a bulge (70), which runs along the channel (62) in such a way that the bulge (70) together with the channel (62) forms the bypass duct with respect to the evaporator (28).

## Patentansprüche

1. Heizungs-, Lüftungs- und/oder Klimatisierungseinheit (10) mit einer Verdampfereinheit (22) und mit einem Gehäuse (12), in dem die Verdampfereinheit (22) aufgenommen ist, wobei die Verdampfereinheit (22) einen Verdampfer (28) umfasst, der zwei entgegengesetzt gerichtete Stirnflächen (32) aufweist, die eine Einlass- und eine Auslassseite (34, 36) für den Luftstrom bilden, eine obere und eine untere Kante (38, 40) aufweist und zwei Seitenkanten (42, 44) aufweist, die die obere und die untere Kante (38, 40) verbinden, die zusammen die zwei Stirnflächen (32) umgeben, wobei die obere und die untere Kante (38, 40) und die Seitenkanten (42, 44) jeweils eine zugeordnete Seitenfläche (46, 48, 50, 52) aufweisen, und ein elastisches Dämpfungsmaterial (30) umfasst, das an der Außenseite des Verdampfers (28) befestigt ist,
**dadurch gekennzeichnet, dass** an einer der den Seitenkanten (42, 44) zugeordneten Seitenflächen (50, 52) das elastische Dämpfungsmaterial (30) zumindest abschnittsweise in Form von zwei separaten Dichtleisten (58, 60) derart angeordnet ist, dass zwischen den Dichtleisten (58, 60) ein Kanal (62) gebildet ist, wobei das elastische Dämpfungsmaterial (30) zwischen dem Gehäuse (12) und dem Verdampfer (28) eingespannt ist und wobei das Gehäuse (12) den zwischen den Dichtleisten (58, 60) gebildeten Kanal (62) derart abdeckt, dass der Kanal (62) einen Bypasskanal in Bezug auf den Verdampfer (28) bildet.

2. Heizungs-, Lüftungs- und/oder Klimatisierungseinheit (10) nach Anspruch 1, **dadurch gekennzeichnet, dass** sich eine der zwei separaten Dichtleisten (58, 60) an der der Unterkante (40) zugeordneten Seitenfläche (48) fortsetzt und die andere der zwei separaten Dichtleisten (58, 60) an der der Seitenkante (42) zugeordneten einen Seitenfläche (50) endet.

3. Heizungs-, Lüftungs- und/oder Klimatisierungseinheit (10) nach Anspruch 2, **dadurch gekennzeichnet, dass** die andere Dichtleiste (58) an der einen Seitenfläche (50) mit Abstand zu der der Unterkante (40) zugeordneten Seitenfläche (48) endet.

4. Heizungs-, Lüftungs- und/oder Klimatisierungseinheit (10) nach einem der Ansprüche 1 und 2, **dadurch gekennzeichnet, dass** eine weitere Dichtleiste (64), die sich ebenfalls auf der der unteren Kante (40) zugeordneten Seitenfläche (48) fortsetzt, auf der gegenüberliegenden, der gegenüberliegenden Seitenkante (44) zugeordneten Seitenfläche (52) angeordnet ist, wobei die Dichtleisten (60, 64) auf der der unteren Kante (40) zugeordneten Seitenfläche (48) in einem Abstand voneinander enden.

5. Heizungs-, Lüftungs- und/oder Klimatisierungseinheit (10) nach einem der vorhergehenden Ansprüche, **dadurch gekennzeichnet, dass** die zwei separaten Dichtleisten (58, 60) an einer Verbindungsstelle (68) miteinander verbunden sind, wobei die Verbindungsstelle (68) an der der Seitenkante (42) zugeordneten einen Seitenfläche (50) in einem an die Oberkante (38) angrenzenden Bereich angeordnet ist.

6. Heizungs-, Lüftungs- und/oder Klimatisierungseinheit (10) nach einem der vorhergehenden Ansprüche, **dadurch gekennzeichnet, dass** das elastische Dämpfungsmaterial (30) als einteiliges Dichtelement ausgebildet ist.

7. Heizungs-, Lüftungs- und/oder Klimatisierungseinheit (10) nach einem der vorhergehenden Ansprüche, **dadurch gekennzeichnet, dass** das elastische Dämpfungsmaterial (30) mit dem Verdampfer (28) verklebt ist.

8. Heizungs-, Lüftungs- und/oder Klimatisierungseinheit (10) nach einem der vorhergehenden Ansprüche, **dadurch gekennzeichnet, dass** das elastische Dämpfungsmaterial (30) ein geschäumtes Material ist.

9. Heizungs-, Lüftungs- und/oder Klimatisierungseinheit (10) nach einem der vorhergehenden Ansprüche, **dadurch gekennzeichnet, dass** das Gehäuse (12) eine Ausbuchtung (70) aufweist, die derart entlang des Kanals (62) verläuft, dass die Ausbuchtung (70) zusammen mit dem Kanal (62) den Bypasskanal in Bezug auf den Verdampfer (28) bildet.

## Revendications

1. Unité de chauffage, ventilation et/ou climatisation (10) dotée d'une unité formant évaporateur (22) et pourvue d'un boîtier (12) dans lequel se loge l'unité formant évaporateur (22), l'unité formant évaporateur (22) comprenant un évaporateur (28) pourvu de deux faces d'extrémité (32) dirigées à l'opposé l'une de l'autre, lesquelles forment un côté entrée et un côté sortie (34, 36) pour le flux d'air, pourvu d'un bord supérieur et d'un bord inférieur (38, 40) et pourvu de deux bords latéraux (42, 44) rejoignant le bord supérieur et le bord inférieur (38, 40), lesquels conjointement entourent les deux faces d'extrémité (32), le bord supérieur et le bord inférieur (38, 40) et les bords latéraux (42, 44) étant chacun pourvus d'une face latérale (46, 48, 50, 52) associée, et comprenant un matériau d'amortissement élastique (30) qui est fixé sur le côté extérieur de l'évaporateur (28),
**caractérisée en ce que**, sur l'une des faces latérales (50, 52) associées aux bords latéraux (42, 44), le matériau d'amortissement élastique (30) est agencé au moins dans certaines parties sous forme de deux bandes d'étanchéité (58, 60) distinctes, de manière à former un canal (62) entre les bandes d'étanchéité (58, 60), le matériau d'amortissement élastique (30) étant enserré entre le boîtier (12) et l'évaporateur (28), et le boîtier (12) recouvrant le canal (62) formé entre les bandes d'étanchéité (58, 60), de manière à ce que le canal (62) forme un conduit de dérivation par rapport à l'évaporateur (28).

2. Unité de chauffage, ventilation et/ou climatisation (10) selon la revendication 1, **caractérisée en ce que** l'une des deux bandes d'étanchéité (58, 60) distinctes se poursuit sur la face latérale (48) associée au bord inférieur (40) et l'autre des deux bandes d'étanchéité (58, 60) distinctes se termine sur ladite une face latérale (50) associée au bord latéral (42).

3. Unité de chauffage, ventilation et/ou climatisation (10) selon la revendication 2, **caractérisée en ce que** l'autre bande d'étanchéité (58) se termine sur ladite une face latérale (50) à distance de la face latérale (48) associée au bord inférieur (40).

4. Unité de chauffage, ventilation et/ou climatisation (10) selon l'une ou l'autre des revendications 1 et 2, **caractérisée en ce qu'**une autre bande d'étanchéité (64) qui se poursuit de la même façon sur la face latérale (48) associée au bord inférieur (40) est agencée sur la face latérale (52) opposée associée au bord latéral (44) opposé, les bandes d'étanchéité (60, 64) se terminant à distance l'une de l'autre sur la face latérale (48) associée au bord inférieur (40).

5. Unité de chauffage, ventilation et/ou climatisation (10) selon l'une des revendications précédentes, **caractérisée en ce que** les deux bandes d'étanchéité (58, 60) distinctes se rejoignent au niveau d'un point de jonction (68), le point de jonction (68) étant agencé sur ladite une face latérale (50) associée au bord latéral (42), dans une région jouxtant le bord supérieur (38).

6. Unité de chauffage, ventilation et/ou climatisation (10) selon l'une des revendications précédentes, **caractérisée en ce que** le matériau d'amortissement élastique (30) prend la forme d'un élément formant joint étanche monobloc.

7. Unité de chauffage, ventilation et/ou climatisation (10) selon l'une des revendications précédentes, **caractérisée en ce que** le matériau d'amortissement élastique (30) est collé sur l'évaporateur (28).

8. Unité de chauffage, ventilation et/ou climatisation (10) selon l'une des revendications précédentes, **caractérisée en ce que** le matériau d'amortissement élastique (30) est un matériau mousse.

9. Unité de chauffage, ventilation et/ou climatisation (10) selon l'une des revendications précédentes, **caractérisée en ce que** le boîtier (12) est pourvu d'un renflement (70), lequel longe le canal (62) de manière à ce que le renflement (70) forment, conjointement avec le canal (62), le conduit de dérivation par rapport à l'évaporateur (28).
